# EUROPÄISCHE PATENTSCHRIFT

(11) **EP 0 410 312 B1**
(45) Veröffentlichungstag und Bekanntmachung des Hinweises auf die Patenterteilung: **27.09.1995**
(21) Anmeldenummer: 90113896.6
(22) Anmeldetag: 20.07.1990
(51) Int. Cl.: A01C 17/00

(54) **Scheuderstreuer für rieselfähiges Streugut, insbesondere Dünger**
Centrifugal spreader for granular materials, particularly fertilizers
Distributeur centrifuge de matériaux granulaires, notamment d'engrais

(30) Priorität: 22.07.1989 DE 3924331
(43) Veröffentlichungstag der Anmeldung: 30.01.1991
(73) Patentinhaber: RAUCH LANDMASCHINENFABRIK GMBH, D-76545 Sinzheim (DE)
(72) Erfinder: 1Rauch, Norbert, Dipl.-Ing., D-7573 Sinzheim (DE)
(74) Vertreter: Lichti, Heiner, Dipl.-Ing.

(56) Entgegenhaltungen:
- EP-A- 0 292 872
- EP-A- 0 292 873
- EP-A- 0 327 941
- WO-A-88/09609
- US-A- 3 109 657

## Beschreibung

Die Erfindung betrifft einen Schleuderstreuer nach dem Oberbegriff des Anspruchs 1, der aus der EP-A-0 292 893 bekannt ist.

Schleuderstreuer des vorgenannten Aufbaus werden in der Regel mit zwei Schleuderscheiben betrieben, um über die Streubreite ein Streubild zu erhalten, das beim Anschlußfahren zu einer gleichmäßigen Verteilung des Düngers über die Arbeitsbreite führt. Eine solche gleichmäßige Verteilung wird insbesondere dann erreicht, wenn das Streubild flach dreieckförmig ausgebildet ist, so daß sich beim Anschlußfahren durch entsprechendes Überlappen der Streubilder eine quer zur Fahrtrichtung lineare Düngerverteilung ergibt.

Beim sogenannten Grenzstreuen, d. h. beim Fahren im letzten Schlag, muß das von der der Feldgrenze zugekehrten Schleuderscheibe erzeugte Streubild anders ausgebildet sein, als das Streubild, das von der der Feldgrenze abgekehrten Schleuderscheibe erzeugt wird, da an der Grenze ein Anschlußfahren nicht mehr möglich ist, ein Überlappen von zwei Streubildern also nicht mehr stattfindet. Zu diesem Zweck werden spezielle Grenzstreuscheiben eingesetzt, die ein steilflankiges Streubild erzeugen, d. h. ein Streubild, das über den größten Teil der Restbreite geradlinig und etwa senkrecht zur Fahrtrichtung verläuft und zur Grenze hin steil abfällt. Zu diesem Zweck sind die Schleuderscheiben auswechselbar auf ihrer Antriebswelle angeordnet (EP-A-0 292 873).

Jeder Landwirt arbeitet üblicherweise mit nur einer Arbeitsbreite, die beim Fahrgassen-System durch die Arbeitsbreite der Sämaschine vorgegeben ist. Für diese vorgegebene Arbeitsbreite braucht der Landwirt für die normale Bodendüngung einen Satz Schleuderscheiben und wenigstens eine Grenzstreuscheibe. Da eine solche Grenzstreuscheibe ein befriedigendes Streubild jedoch nur bei einer bestimmten Grenzstreubreite - nachfolgend im Gegensatz zur Arbeitsbreite lediglich als Streubreite bezeichnet - erzeugt und in der Regel in einem landwirtschaftlichen Betrieb bei den einzelnen Feldern verschiedene Verhältnisse an der Feldgrenze vorliegen, benötigt der Landwirt in aller Regel mehrere Grenzstreuscheiben, um unterschiedliche Streubreiten beim Grenzstreuen mit einem gleichmäßig guten Streubild erfassen zu können.

Ein Schleuderstreuer muß ferner die Möglichkeit bieten, sowohl eine Bodendüngung, als auch eine Spätdüngung zu ermöglichen, d. h. ein Düngen der bereits aufgewachsenen Pflanzen. Dies geschieht in der Regel dadurch, daß der vom Dreipunktgestänge des Schleppers aufgenommene Schleuderstreuer aus der für die Bodendüngung horizontalen Lage der Schleuderscheiben in eine nach hinten ansteigend geneigte Lage gekippt wird. Durch das Kippen ändern sich die Abwurfverhältnisse an der Schleuderscheibe. Dies bedeutet für das Grenzstreuen, daß für die Spätdüngung eine andere Grenzstreuscheibe eingesetzt werden muß als für die Normaldüngung. Zusammengefaßt bedeutet dies, daß der Landwirt wenigstens ein Paar Grenzstreuscheiben, nämlich eine für die Bodendüngung und eine für die Spätdüngung, sowie einen oder mehrere weitere Sätze von Grenzstreuscheiben für unterschiedliche Streubreiten an der Grenze benötigt. Dies erfordert einen entsprechenden Kostenaufwand sowie Vorkehrungen zur Vermeidung von Verwechslungen. Für den Hersteller von Schleuderstreuern bedeutet dies, daß er in seinem Maschinenprogramm nicht nur die ohnehin für verschiedene Arbeitsbreiten notwendigen unterschiedlichen Schleuderscheiben, sondern zusätzlich die vorgenannte Anzahl von Grenzstreuscheiben führen muß.

Man hat dieses Problem durch eine spezielle Konstruktion der Schleuderscheiben zu beheben versucht, indem die Wurfflügel wenigstens zweiteilig ausgebildet sind und der jeweils äußere Abschnitt in verschiedene Lagen auszichbar, der Wurfflügel gegebenfalls auch noch in der Scheibenebene schwenkbar ist (EP-A-0 292 873. Dies bringt jedoch erhebliche Probleme bei einer exakten Einstellung mit sich, da sich Markierungen und dergleichen aufgrund der verschleißenden Beanspruchung durch den Dünger nicht oder nur sehr unzulänglich anbringen lassen, wie überhaupt ein zweiteiliger Wurfflügel bei den hohen Bahngeschwindigkeiten und der Verschleiß-Beanspruchung problematisch ist. Auch hierbei sind für das Grenzstreuen speziell ausgebildete, auswechselbare Scheiben vorgesehen, Außerdem ist eine Verstellung des Aufgabepunktes zur Veränderung der Arbeitsbreite beschrieben. Eine solche Verlagerung für zwei gleich ausgebildete Schleuderscheiben beschreibt auch die nach Art. 53 (3) EPÜ zum Stand der Technik gehörende EP-A-0 385 236

Der Erfindung liegt die Aufgabe zugrunde, einen Schleuderstreuer so auszubilden, daß für das Grenzstreuen nicht mehrere Grenzstreuscheiben erforderlich sind und zweiteilige Flügel an der Schleuderscheibe vermieden werden.

Ausgehend von dem Schleuderstreuer nach dem Oberbegriff des Anspruchs 1 (EP-A-0 292 873) wird diese Aufgabe durch dessen kennzeichnende Merkmale gelöst.

Die Erfindung geht von der Erkenntnis aus, daß sich durch Verlagerung des Aufgabepunktes nicht nur die Streubreite der Schleuderscheibe, sondern auch das Streubild verändern läßt, und zwar insbesondere in einer Form, wie dies bisher nur durch verschiedene Grenzstreuscheiben oder durch Scheiben mit verstellbaren, zweiteiligen Wurfflügeln möglich gewesen ist. Dabei wird der Aufgabepunkt auf der Grenzstreuscheibe gegenüber der Normalscheibe in Drehrichtung verlagert. Die Erfindung gibt weiterhin die Möglichkeit, durch Einstellung des Aufgabepunktes in verschiedene Positionen das gewünschte Grenzstreubild sowohl beim Normaldüngen, als auch beim Spätdüngen zu erzielen.

Ferner ist es möglich, durch Verlagerung des Aufgabepunktes verschiedene Grenzstreubreiten zu überdecken, indem der Aufgabepunkt auf der Grenzstreuscheibe derart einstellbar ist, daß er bei großer Streubreite gegenüber einer kleineren Streubreite in Drehrichtung verlagert ist. Die Erfindung bietet somit die Möglichkeit, mit einer einzigen Grenzstreuscheibe bzw. mit einer linken und einer rechten Grenzstreuscheibe in beiden Düngungsarten - Normaldüngung und Spätdüngung - und bei verschiedenen Gegebenheiten der Feldgrenzen eines Betriebs mit verschiedenen Grenzstreubreiten arbeiten zu können. Es ist folglich für das Grenzstreuen bei allen vorkommenden Arbeiten nur ein einziger Scheibenwechsel vorzunehmen. Für den Landwirt wird folglich der Kostenaufwand reduziert und die Lagerhaltung wesentlich vereinfacht. Für den Hersteller bedeutet dies eine erhebliche Verringerung seiner Angebotspalette, geringere Fertigungskosten und weniger Probleme bei der Lagerhaltung und Warenverteilung.

In weiterhin bevorzugter Ausbildung ist vorgesehen, daß der Aufgabepunkt auf der Grenzstreuscheibe in Abhängigkeit von der Düngersorte einstellbar ist.

Damit trägt die Erfindung der Tatsache Rechnung, daß die Streubreite, so auch diejenige der Grenzstreuscheibe, und das Streubild von der jeweils verarbeiteten Düngersorte abhängig ist.

Diese Einflußfaktoren können dadurch berücksichtigt werden, daß beispielsweise der Aufgabepunkt auf der Grenzstreuscheibe für gekörnten Dünger großer Korngröße und/oder glatter Oberfläche gegenüber einem solchen kleiner Korngröße und/oder rauher Oberfläche entgegen der Drehrichtung verlagert ist. Wird Dünger mit gebrochenem, kantigem Korn, also insbesondere Mineraldünger, wie Kali, verarbeitet, so sollte der Aufgabepunkt gegenüber gekörntem Dünger gleichfalls im Drehrichtung verlagert werden.

Das Streubild der Grenzstreuscheibe läßt sich ferner durch die Stellung der Flügel auf der Grenzstreuscheibe beeinflussen. So ist vorgesehen, daß zumindest ein Flügel auf der Grenzstreuscheibe zumindest für größere Streubreiten weniger zurückgestellt ist als die Flügel auf der Normalscheibe. Diese Maßnahme kann auch für alle Flügel der Grenzstreuscheibe vorgesehen sein. Unter Rückstellung versteht man - im Gegensatz zum Vorstellen - eine außerradiale Anordnung des Flügels derart, daß in Drehrichtung gesehen das äußere Ende des Flügels gegenüber dem inneren Ende nachläuft. Vorzugsweise werden beide vorgenannten Maßnahmen an der Grenzstreuscheibe gleichzeitig verwirklicht, nämlich die andere Anordnung des Aufgabepunktes und der Flügel, um die gesamte Variationsbreite (Grenzstreubreite, Düngersorte, Streuprofil) mit einer einzigen Grenzstreuscheibe abzudecken.

Eine weitere vorteilhafte Ausgestaltung zeichnet sich dadurch aus, daß die Position der Flügel auf der Grenzstreuscheibe zur Änderung ihrer Rückstellung einstellbar ist, wobei insbesondere vorgesehen ist, daß die Position der Flügel auf der Grenzstreuscheibe in Abhängigkeit von der Streubreite derart einstellbar ist, daß die Rückstellung bei kleiner Streubreite größer ist als bei großer Streubreite.

Die Gleichmäßigkeit des Streubildes läßt sich dadurch weiterhin günstig beeinflussen, daß die Flügel auf der Grenzstreuscheibe untereinander unterschiedlich einstellbar sind.

Den besonderen Verhältnissen beim Grenzstreuen, nämlich der geringeren Streubreite, trägt die weitere Maßnahme Rechnung, daß die Flügel der Grenzstreuscheibe kürzer sind als die der Normalscheibe.

Der Landwirt kommt also üblicherweise mit einer einzigen Grenzstreuscheibe, die die erfindungsgemäß vorgesehenen Variationsmöglichkeiten bietet, aus. Dies gilt insbesondere dann, wenn die Drehzahl der Schleuderscheiben variabel ist, was beispielsweise bei einem hydraulischen Antrieb problemlos möglich ist und womit die Arbeitsbreite über einen weiten Bereich geändert werden kann. Allenfalls für extrem große Streubreiten von beispielsweise 30 m oder mehr oder für extrem kleine Streubreiten von beispielsweise 12 m oder weniger, sollte zumindest ein Flügel der Grenzstreuscheibe austauschbar sein, und zwar im erstgenannten Fall gegen einen längeren, im zweitgenannten Fall gegen einen kürzeren.

Die Verlagerung des Aufgabepunktes kann auf verschiedene Weise erfolgen, wobei auch bekannte Ausführungen übernommen werden können, beispielsweise durch Verstellen des die Auslauföffnung aufweisenden Bodens oder eines zwischen der Auslauföffnung und der Schleuderscheibe angeordneten Leitorgans.

In einer bevorzugten Ausführungsform ist vorgesehen, daß der Aufgabepunkt durch Verstellen der Schleuderscheibe gegenüber der Auslauföffnung verlagerbar ist.

Bei einer bekannten Ausführungsform eines Schleuderstreuers, bei dem die Schleuderscheiben mittels Hydromotoren angetrieben und von einem Träger aufgenommen sind, kann der Aufgabepunkt dadurch verändert werden, daß die Schleuderscheiben mittels des Trägers verstellbar sind. Die Verstellung kann dabei durch Schwenken oder durch Verschieben des Trägers erfolgen.

Mit der erfindungsgemäß vorgesehenen Verstellung des Aufgabepunktes wird nicht nur das Grenzstreuproblem gelöst, sondern es kann innerhalb des Verstellbereichs der Aufgabepunkt auch in Abhängigkeit von der Düngersorte verlagert werden. Es können die vorgenannten Verstellmöglichkeiten je für sich vorgesehen, aber auch miteinander kombiniert werden, um einen größtmöglichen Bereich bei geringsten Stellwegen abzudecken.

Bei Schleuderstreuern ist es zur Mengenregulierung bekannt, den freien Querschnitt der Auslauföffnungen mittels eines schieber- oder blendenartigen Verschlusses einzustellen. Im Zusammenhang mit der Erfindung ist es von Vorteil, wenn die Form der Auslauföffnung und die einen Teil des freien Querschnittes begrenzende Kante des Verschlusses so ausgebildet und/oder diese Kante so über die Auslauföffnung bewegbar ist, daß der Flächenschwerpunkt des freien Querschnittes mit zunehmender Größe desselben nach außen und/oder entgegen der Drehrichtung wandert.

Um die Flügel auf der Grenzstreuscheibe einstellen zu können, ist in bevorzugter Ausführung vorgesehen, daß die Grenzstreuscheibe für jeden Flügel wenigstens zwei außerradial angeordnete Aufnahmen aufweist, von denen eine achsnah, die andere achsfern angeordnet ist und von denen eine die Positionierung des Flügels in verschiedenen Stellungen gestattet. Dabei ist die Ausbildung vorzugsweise so getroffen, daß die eine Aufnahme vorgegebene Positionen für die Einstellung des Flügels in verschiedenen Stellungen aufweist, so daß die Flügel wiederkehrend in gleicher Position angebracht werden können. Die Positionen können gegebenenfalls an der Unterseite der Grenzstreuscheibe markiert und diese markierten Positionen in einer tabellarischen Bedienungsanleitung für verschiedene Düngersorten und Streubreiten angegeben sein. Die Tabelle kann ferner noch Angaben über die Aufgabepunkte enthalten.

Ein einfaches und vorteilhaftes Ausführungsbeispiel zeichnet sich dadurch aus, daß die Aufnahmen als Löcher in der Grenzstreuscheibe ausgebildet sind und daß die Flügel in die Löcher eingreifende Zapfen mit Befestigungsmitteln an der Unterseite der Grenzstreuscheibe aufweisen, wobei zweckmäßigerweise die achsnahe Aufnahme von einem einzigen Loch, die achsferne Aufnahme von mehreren auf einem Kreisbogen um das achsnahe Loch liegenden Löchern gebildet ist.

Nachstehend ist die Erfindung anhand eines in der Zeichnung wiedergegebenen Ausführungsbeispiels beschrieben. In der Zeichnung zeigen:
- Figur 1: eine Ansicht auf die Frontseite eines Zwei-Scheiben-Streuers;
- Figur 2: eine Ansicht auf den Streuer gemäß Figur 1 von oben;
- Figur 3: eine Draufsicht auf eine der beiden Schleuderscheiben;
- Figur 4: eine vergrößerte Detailansicht aus der Darstellung gemäß Figur 1;
- Figur 5: eine Ansicht auf eine Seite des Streuers;
- Figur 6: eine Seitenansicht einer Grenzstreuscheibe;
- Figur 7: eine schematische Draufsicht auf eine Schleuderscheibe mit projizierter Auslauföffnung und
- Figur 8: eine Draufsicht auf die Grenzstreuscheibe mit einstellbaren Flügeln.

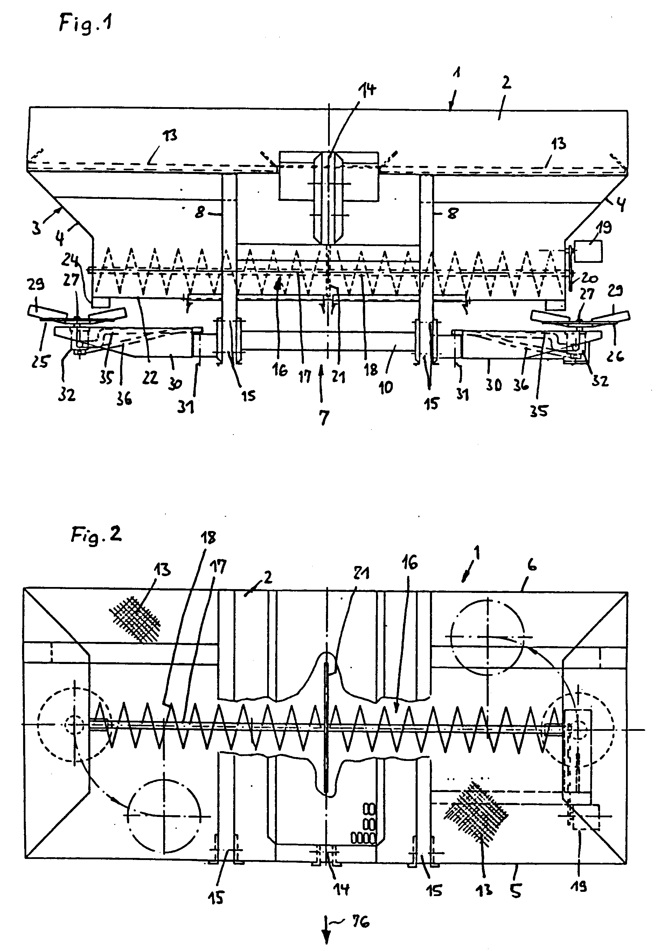

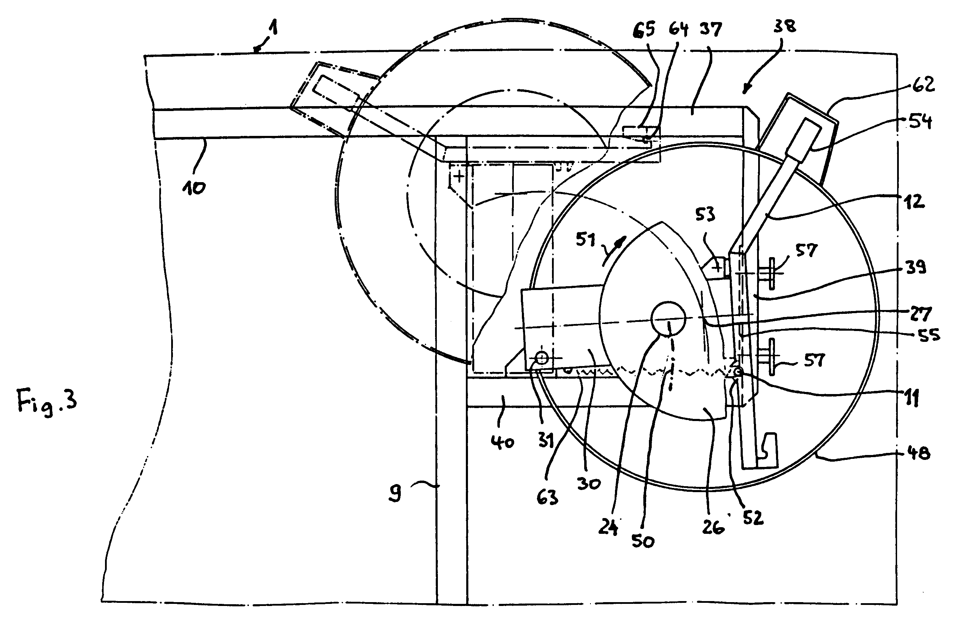

Der in der Zeichnung wiedergegebene Schleuderstreuer weist einen Düngerbehälter 1 auf, der sich mit seiner Längsachse quer zu der in Figur 2 wiedergegebenen Fahrtrichtung erstreckt und eine Breite aufweist, die der für den Straßentransport zulässigen Gesamtbreite entspricht. Er besteht aus einem im wesentlichen rechteckigen Oberteil 2 und einem Unterteil 3, dessen Seitenwände 4, Frontwand 5 und Rückwand 6 nach innen geneigt sind. Dabei laufen die Frontwand 5 und Rückwand 6 in einen muldenförmigen Boden (siehe Figur 3) ein. Auf die offene Stirnseite des rechteckigen Oberteils 2 können gegebenenfalls noch entsprechende Aufsätze aufgesetzt werden, um das Fassungsvermögen des Vorratsbehälters 1 zu erhöhen. In das Oberteil 2 sind Siebrahmen 13 eingelegt und in der Mitte ein aussteifendes Lochblech eingesetzt.

Der Schleuderstreuer weist ferner einen Tragrahmen 7 auf, der im wesentlichen aus zwei senkrechten L-förmigen Trägern 8 (Figur 3) und einer deren untere Schenkel verbindenden Quertraverse 10 besteht, wobei letztere die Schenkel nach außen überragt.

Die L-förmigen Träger 8 des Rahmens 7 sind innerhalb der vorderen Vertikalflucht des Behälters 1 angeordnet. Zu diesem Zweck kann der Behälter 1 im Bereich seines Oberteils 2 an der Frontwand 5 nach innen eingezogen sein. Im übrigen liegt der größere Teil der L-förmigen Träger 8 unterhalb der geneigten Frontwand 5 des Behälters 1. Auf diese Weise sitzen die Anschlußpunkte 14 für den Oberlenker und die Anschlußpunkte 15 für den Unterlenker nächstmöglich zur Mittellängsebene des Behälters, wodurch sich eine günstige Schwerpunktlage ergibt.

Innerhalb des Behälters 1 ist unmittelbar im muldenförmigen Boden ein Querförderer 16 angeordnet, der beim gezeigten Ausführungsbeispiel aus einer durchgehenden Welle 17 und einer mit Abstand von dieser getragenen Schraubenwendel 18 besteht. Der Querförderer 16 wird an einer Seite mittels eines Hydraulikmotors 19 über ein Kettenrad 20 angetrieben und ist in seinem mittleren Bereich bei 21 am Behälter abgestützt. Der muldenförmige Boden weist im Bereich seiner äußeren Enden ebene Abschnitte 22 (siehe Figur 3) auf, in denen die Austragsöffnungen vorgesehen sind. Im Bereich dieser Austragsöffnungen 24 weist der Querförderer keine Förderorgane, sondern lediglich noch Umwälzorgane auf, die dafür sorgen, daß das oberhalb der Austragsöffnung liegende Gut nicht mehr nach außen gefördert, sondern nur noch umgewälzt wird.

Unterhalb der beiden außen liegenden Austragsöffnungen ist je eine Schleuderscheibe 25, 26 angeordnet, deren Achse 27, 28 gegenüber der Austragsöffnung versetzt ist, so daß der die Austragsöffnung verlassende Dünger mit Abstand von der Achse auf die Schleuderscheiben 25, 26 trifft. Die Schleuderscheiben 25, 26 weisen in herkömmlicher Art mehrere Schleuderschaufeln 29 auf. Im übrigen sitzen die Schleuderscheiben 25, 26 an Schwenkarmen 30, die an vertikalen Achsen 31 gelagert sind. Bei dem Ausführungsbeispiel gemäß Figur 1 kann die eine Schleuderscheibe 25 in Fahrtrichtung 2 nach vorne, die andere Schleuderscheibe 26 entgegen der Fahrtrichtung nach hinten geschwenkt werden, vorzugsweise jedoch sind beide Schleuderscheiben nur nach hinten schwenkbar, wie in Figur 2 bei der rechts gezeigten Schleuderscheibe 25 angedeutet.

Die Schleuderscheiben 25, 26 sind mittels je eines Hydraulikmotors 32 angetrieben, die jewels am äußeren Ende der Schwenkarme 30 angebracht sind. Beim Ausführungsbeispiel der Figur 1 sitzen die Schleuderscheiben unmittelbar auf der nach oben weisenden Abtriebswelle des Hydraulikmotors 32 und sind über die Hydraulikleitungen 35, 36 von einer nicht gezeigten Pumpe versorgt. Die Hydraulikleitungen 35, 36 sind vorzugsweise geschützt in den Schwenkarmen 30 verlegt.

In Figur 3 ist die Schleuderscheibe 26 mit durchgezogenen Linien in der Betriebsstellung und mit strichpunktierten Linien in der ausgeschwenkten Stellung - ähnlich der Darstellung in Figur 2 - für die Vornahme einer Abstreuprobe gezeigt. Oberhalb der in Betriebsstellung befindlichen Schleuderscheibe 26 ist die Auslauföffnung 24 angedeutet, die versetzt neben der Drehachse 27 der Schleuderscheibe 26 ausmündet. An dem Schwenkarm 30 ist ein Stellhebel 12 gelagert, mittels dessen die Schleuderscheibe 26 aus der Betriebsstellung in die die Auslauföffnung 24 freigebende Stellung geschwenkt werden kann. In der in Figur 3 gezeigten Betriebsstellung ist der Schwenkarm 30 und somit die Schleuderscheibe 26 am Anschlag 11 verriegelt. Mit dem gleichen Stellhebel 12 kann die Schleuderscheibe in der ausgerückten Stellung gleichfalls an einem Anschlag verriegelt sein, wie dies mit strichpunktierten Linien angedeutet ist.

Figur 3 zeigt ferner die unteren Schenkel 9 der L-förmigen Träger 8 (Figur 1) des Tragrahmens, die an ihren hinteren freien Enden durch die Quertraverse 10 verbunden sind. Die Quertraverse 10 weist einen die unteren Schenkel 9 nach außen überragenden Abschnitt 37 auf, der einen Teil eines Schutzrahmens 38 bildet, welcher durch einen weiteren sich in Fahrtrichtung erstreckenden Schenkel 39 und einen zu dem Abschnitt 37 parallelen Schenkel 40 sowie durch den unteren Schenkel 9 der L-förmigen Träger vervollständigt wird. Innerhalb des Schutzrahmens 38 ist der Schwenkarm 30 angeordnet und verschwenkbar. Zu diesem Zweck sitzt das senkrechte Schwenklager 31 an dem Schenkel 40 des Schutzrahmens 38.

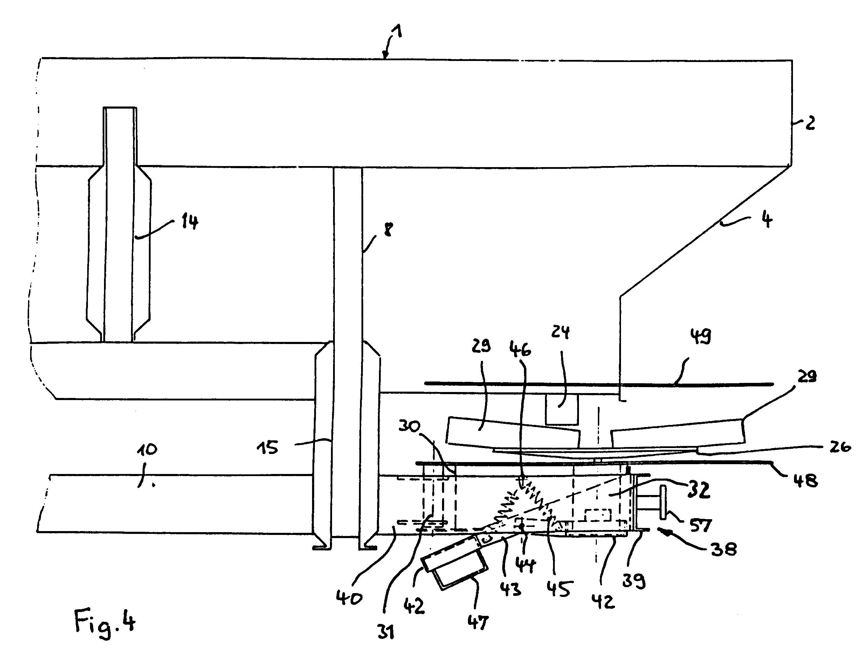

In Figur 4 ist der die Schleuderscheibe 26 antreibende Hydromotor 32 erkennbar, auf dessen Abtriebswelle die Schleuderscheibe 26 aufgesetzt ist. Der Hydromotor 32 und damit auch das äußere Ende des Schwenkarms 30 ist nach unten durch eine Abweiserkufe 42 geschützt, die von einem flachen U-Profil gebildet ist und die den Hydromotor 32 nicht nur von unten, sondern auch von der Seite her untergreift. Die Abweiserkufe 42 sitzt an zwei parallelen Hebeln 43, die an einer etwa in Fahrtrichtung liegenden Achse 44 schwenkbar gelagert sind. Die Schwenkachse 44 wird beispielsweise von zwei Bolzen gebildet, von denen einer am äußeren Abschnitt 37 der Quertraverse 10, der andere an dem dazu parallelen Schenkel 40 des Schutzrahmens 38 (siehe Figur 3) angeordnet ist. An dem Hebel 43 greift eine Feder 45 an, die bei 46 am Schutzrahmen 38 angehängt ist, wobei sich der Anhängepunkt 46 etwa oberhalb der Schwenkachse 44 befindet. Auf diese Weise wird die Abweiserkufe 42 unter Wirkung der Feder 45 in der Funktionsstellung (Figur 4, rechts) gehalten. Um die Abweiserkufe aus dieser Stellung nach innen schwenken zu können, ist an ihrem Ende ein Handgriff 47 angebracht. Beim Verschwenken läuft die Feder 45 über die Schwenkachse 44 in die links wiedergegebene Lage, in der sie die Abweiserkufe 42 in ihrer verschwenkten Lage hält. In dieser Lage kann der Schwenkarm 30 mit der Schleuderscheibe 26 in die in Figur 3 strichpunktiert wiedergegebene Stellung geschwenkt werden, so daß der Raum unterhalb der Auslauföffnung 24 frei ist und der Düngerstrahl ungehindert nach unten austreten und ferner ein Auffanggefäß unterhalb der Auslauföffnung 24 aufgestellt oder eingehängt werden kann.

Wie aus Figur 4 ersichtlich überragt der Hydromotor 32 die Unterkante des Schutzrahmens 38 nach unten nicht. Die Abweiserkufe 42 liegt etwa in Höhe der Unterkante des Schutzrahmens 38 oder höher.

An dem Schwenkarm 30 ist ferner ein zur Schleuderscheibe 26 konzentrischer Schutzring 48 angebracht. Ein gleich großer Schutzring 49 in ebenfalls konzentrischer Anordnung zur Schleuderscheibe 26 ist unmittelbar oberhalb dieser am Vorratsbehälter angebracht, so daß ein wirksamer Unfallschutz gegen Berühren der Schleuderscheibe 26 gebildet ist.

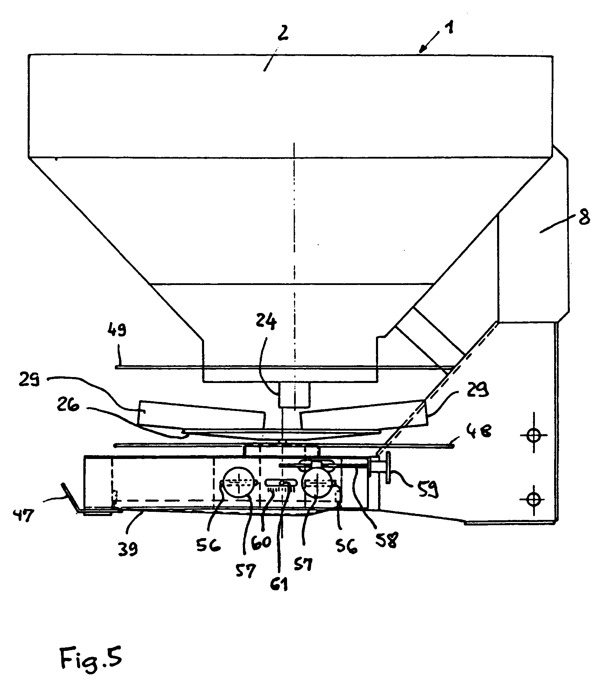

In Figur 3 ist eine Betriebsstellung der Schleuderscheibe 26, beispielsweise für die Normaldüngung wiedergegeben. Der Aufgabepunkt befindet sich unterhalb der mit 24 angedeuteten Auslaßöffnung nahe der Achse 27 bzw. dem Mittelpunkt der Scheibe 26. Die Schleuderscheibe 26 läßt sich mittels des Schwenkarms 30 stufenlos verschwenken, so daß der Aufgabepunkt etwa auf der strichpunktiert wiedergegebenen Linie 50 auf der Scheibe entgegen der Drehrichtung 51 und gleichzeitig nach außen wandert. Zur Verstellung des Aufgabepunktes ist der Anschlag 11 als Riegelzapfen ausgebildet, der von einem Riegel 52 mit U-förmigem Querschnitt umfaßt wird. Der Riegel 52 sitzt an dem einen Arm des zweiarmigen Stellhebels 12, der bei 53 am Schwenkarm 30 gelagert und an seinem anderen Arm mit einer Handhabe 54 versehen ist. Der Riegelzapfen 11 sitzt an einer Platte 55, die an dem Seitenholm 39 des Schutzrahmens 38 stufenlos verstellbar ist. Zu diesem Zweck sind in dem Seitenholm 39, wie Figur 5 zeigt, zwei fluchtende Langlöcher 56 angeordnet in denen die Führungsplatte 55 mittels Bolzen geführt ist. Die Bolzen wirken weiterhin mit von Hand bedienbaren Spannmuttern zusammen oder sind ihrerseits als Spannschrauben ausgebildet, die mit großflächigen Drehgriffen 57 oder Knebeln versehen sind.

Eine millimetergenaue Verstellung der Führungsplatte 55 bzw. des Riegelzapfens 11 ist mittels der Stellspindel 58 mit Drehgriff 59 möglich. Die eingestellte bzw. einzustellende Betriebsstellung läßt sich anhand einer am Rahmenschenkel 39 angeordneten Skala 60 ablesen, die entlang eines Langlochs verläuft, in das wiederum ein Anzeiger 61 an der Führungsplatte 55 eingreift.

Um den Aufgabepunkt aus der Betriebsstellung gemäß Figur 3 zu verlagern, wird der Stellhebel 12 mittels der Handhabe 54 um das senkrechte Lager 53 geschwenkt. Dabei kann sich die Bedienungsperson mit der Hand an dem Bügel 62 am Schutzring 48 abstützen. Das Öffnen der Verriegelung geschieht entgegen der Kraft der Zugfeder 63, die zwischen dem Schwenkarm 30 und dem der Handhabe 54 gegenüberliegenden Ende des zweiarmigen Stellhebels 12 aufgespannt ist und die den Riegel 52 in der Betriebsstellung auf dem Riegelzapfen 11 hält. Beim Betätigen des Stellhebels 12 kommt der Riegel 52 vom Riegelzapfen 11 frei. Gegebenenfalls kann der Schwenkarm 30 in die strichpunktiert gegebene Position der Schleuderscheibe verschwenkt werden. Nach Lösen der Spannschrauben mittels der Drehgriffe 57 kann dann die Führungsplatte 55 mit dem Riegelzapfen 11 mittels der Spindel 58 in die gewünschte neue Betriebsstellung, beispielsweise für das Grenzstreuen verschoben werden. Ist diese erreicht, wird die Schleuderscheibe mit dem Schwenkarm zurückgeschwenkt und der Riegel 52 wieder über den Riegelzapfen 11 geschoben. Aus jeder der gezeigten Betriebsstellungen läßt sich die Schleuderscheibe 26 in die strichpunktiert wiedergegebene Freigabestellung schwenken, um beispielsweise eine Abstreuprobe zu machen oder die Schleuderscheibe für die Normaldüngung gegen die Grenzstreuscheibe auszutauschen. In der Freigabestellung wirkt der Stellhebel 12 mit einem festen Riegelzapfen 64 an dem hinteren Rahmenschenkel 37 zusammen. Zu diesem Zweck ist der Stellhebel 12 an dem der Handhabe 54 gegenüberliegenden Ende mit einem hakenartigen Riegel 65 versehen, der beim gezeigten Ausführungsbeispiel außen angeordnet ist, wodurch sich der Vorteil ergibt, daß beide Riegelzapfen 11 und 64 an den Rahmenschenkeln jeweils innenseitig angeordnet sein können.

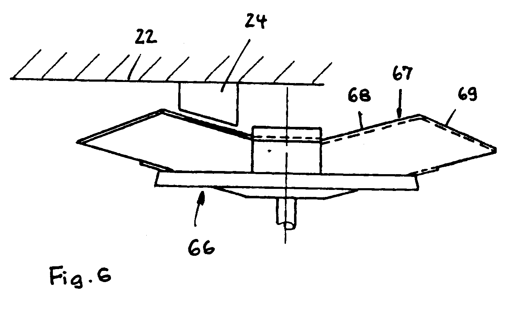

Durch die stufenlose Verstellbarkeit des Aufgabepunktes ist es möglich, für verschiedene Düngungsarten - Normaldüngung und Spätdüngung bei geneigtem Schleuderstreuer - sowie für verschiedene Grenzstreubreiten mit einer einzigen Grenzstreuscheibe auszukommen. Eine solche Grenzstreuscheibe 66 ist in Figur 6 in vergrößerter Seitenansicht gezeigt. Gegenüber der normalen Schleuderscheibe weist die Grenzstreuscheibe 66 einen oberen Schenkel 67 auf, der aus einem ansteigenden Abschnitt 68 und einem nach unten geneigten Abschnitt 69 besteht, so daß der aus dem Auslauf 24 auf die Grenzstreuscheibe 66 gelangende Dünger stärker nach unten abgelenkt wird.

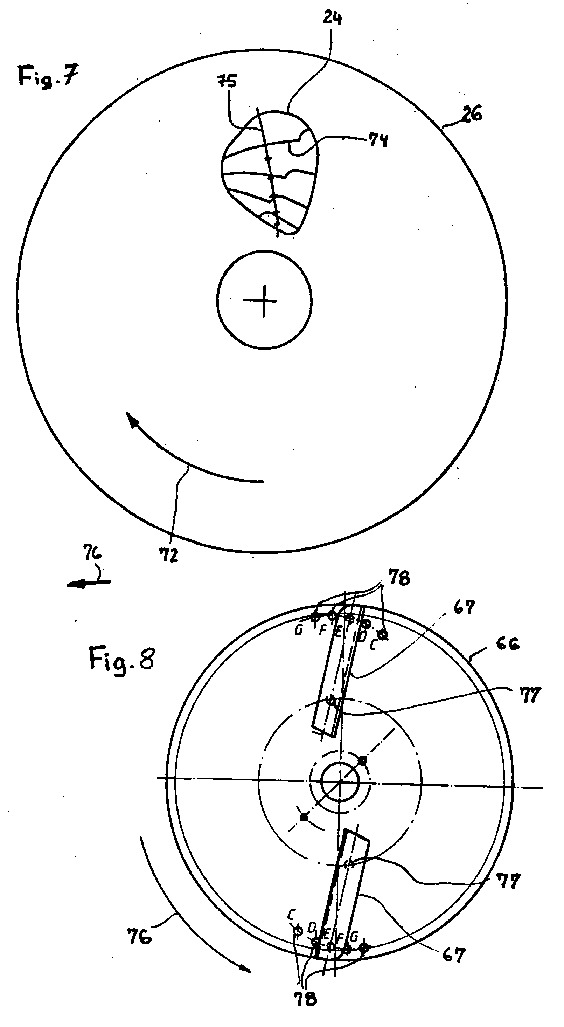

Figur 7 zeigt eine Projektion der Auslauföffnung 24 auf eine Schleuderscheibe 26. Ferner ist die die Auslauföffnung 24 überstreichende Kante 74 eines einstellbaren Verschlusses in mehreren Stellungen wiedergegeben. In der Stellung, die sich am nächsten dem Zentrum der Schleuderscheibe befindet, weist die Auslauföffnung den kleinsten freien Querschnitt auf. Durch Bewegen der Schieberkante 74 nach außen wird der Auslaufquerschnitt vergrößert. Der Flächenschwerpunkt des jeweils freien Querschnittes wandert bei der Öffnungsbewegung auf der Linie 75, also in erster Linie von innen nach außen und außerdem in geringem Maß entgegen der Drehrichtung. Die Fahrtrichtung des Schleppers beim Streuen ist in Figur 7 und 8 mit dem Richtungspfeil 76 angedeutet.

Figur 8 zeigt eine weitere, bevorzugte Ausführungsform der Grenzstreuscheibe 66 mit zwei Flügeln 67, die bezüglich der Drehrichtung 76 zurückgestellt sind, d. h. das äußere Ende des Flügels läuft dem inneren Ende nach; die Flügel sind, wie Figur 9 erkennen läßt außerradial auf der Grenzstreuscheibe angeordnet. Die Rückstellung der Flügel 67 auf der Grenzstreuscheibe ist dabei geringer als die der Flügel 29 auf der Normalscheibe 25 bzw. 26 (Figuren 1, 4 und 5).

Die Flügel weisen an ihrer Unterseite Zapfen, z. B. Gewindezapfen, auf, mittels der sie in Aufnahmen an der Grenzstreuscheibe eingreifen und, z. B. mittels Muttern, an der Unterseite der Grenzstreuscheibe befestigt werden. Als Aufnahmen dienen einerseits ein achsnah angeordnetes Loch 77 und mehrere achsferne Löcher 78, die auf einem Kreisbogen um das Loch 77 angeordnet und mit den Buchstaben C bis G bezeichnet sind. Die Rückstellung des Flügels ist am größten, wenn er im Loch C befestigt ist, und am geringsten bei Befestigung im Loch G, wobei die Variationsbreite durch verschiedene Positionierung der Flügel noch vergrößert wird. So werden beispielsweise für einen großkörnigen, glatten Dünger bei einer Arbeitsbreite von 12 m beide Flügel in der Position C und bei einer Arbeitsbreite von 30 m der eine Flügel in der Position D, der andere in der Position E befestigt. Wird die Flügelstellung noch mit der Verstellung des Aufgabepunktes kombiniert, so liegt der Aufgabepunkt im erstgenannten Fall wesentlich früher als im zweitgenannten Fall. Im übrigen werden kleinere Sprünge in der Arbeitsbreite ausschließlich durch die Verlagerung des Aufgabepunktes überbrückt. Für einen kleinkörnigeren, rauhen Dünger liegt der Aufgabepunkt bei gleicher Flügelstellung weniger früh, während er bei gebrochenem Korn noch früher liegt.

## Patentansprüche

1. Schleuderstreuer für rieselfähiges Streugut, insbesondere Dünger, mit einem den Dünger aufnehmenden Vorratsbehälter (1) mit wenigstens zwei einstellbaren Auslauföffnungen (24) und einer mit Flügeln (29) besetzten Normalschleuderscheibe (25,26,27) unterhalb einer Auslauföffnung, die auswechselbar auf ihrer Antriebswelle angeordnet ist, und mit einer mit Flügeln besetzten, anders als die Normalschleuderscheibe ausgebildeten Grenzstreuscheibe (66) mit einem steilflankigen Streubild, wobei die Grenzstreuscheibe und die Normalschleuderscheiben gegeneinander austauschbar sind, wobei der die Relativlage zwischen Auslauföffnung (24) und Schleuderscheibe (25,26,66,70) bestimmende Aufgabepunkt sowohl für die Normalschleuderscheibe als auch für die Grenzstreischeibe (66) verstellbar ist, dadurch gekennzeichnet, daß der Aufgabepunkt für die Grenzstreuscheibe (66) zur Bildung eines steilflankigen Streubildes gegenüber dem Aufgabepunkt der durch die Grenzstreuscheibe ersatzte Normalschleuderscheibe in deren Drehrichtung (72) verlagert ist.

2. Schleuderstreuer nach Anspruch 1, dadurch gekennzeichnet, daß der Aufgabepunkt für die Grenzstreuscheibe (66) zusätzlich zur Veränderung der Streubreite der Grenzstreuscheibe einstellbar ist.

3. Schleuderstreuer nach Anspruch 1 oder 2, dadurch gekennzeichnet, daß der Aufgabepunkt auf der Grenzstreuscheibe (66) derart einstellbar ist, daß er bei großer Streubreite weiter in Drehrichtung verlagert ist als bei kleiner Streubreite.

4. Schleuderstreuer nach einem der Ansprüche 1 bis 3, dadurch gekennzeichnet, daß der Aufgabepunkt auf der Grenzstreuscheibe (66) in Abhängigkeit von der Düngersorte einstellbar ist.

5. Schleuderstreuer nach einem der Ansprüche 1 bis 4, dadurch gekennzeichnet, daß der Aufgabepunkt auf der Grenzstreuscheibe (66) für gekörnten Dünger großer Korngröße und/oder glatter Oberfläche gegenüber solchen kleiner Korngröße und/oder rauher Oberfläche entgegen der Drehrichtung verlagert ist.

6. Schleuderstreuer nach einem der Ansprüche 1 bis 5, dadurch gekennzeichnet, daß der Aufgabepunkt auf der Grenzstreuscheibe (66) für Dünger mit gebrochenem, kantigem Korn gegenüber gekörntem Dünger entgegen der Drehrichtung verlagert ist.

7. Schleuderstreuer nach einem der Ansprüche 1 bis 6, dadurch gekennzeichnet, daß zumindest ein Flügel (67) auf der Grenzstreuscheibe (66) zumindest für größere Streubreiten weniger zurückgestellt ist als die Flügel auf der Normalscheibe.

8. Schleuderstreuer nach einem der Ansprüche 1 bis 7, dadurch gekennzeichnet, daß die Flügel (67) auf der Grenzstreuscheibe (66) zumindest für größere Streubreiten weniger zurückgestellt sind als die Flügel auf der Normalscheibe.

9. Schleuderstreuer nach einem der Ansprüche 1 bis 8, dadurch gekennzeichnet, daß die Position der Flügel (67) auf der Grenzstreuscheibe (66) zur Änderung ihrer Rückstellung einstellbar ist.

10. Schleuderstreuer nach einem der Ansprüche 1 bis 9, dadurch gekennzeichnet, daß die Position der Flügel (67) auf der Grenzstreuscheibe (66) in Abhängigkeit von der Streubreite derart einstellbar ist, daß die Rückstellung bei kleiner Streubreite größer ist als bei großer Streubreite.

11. Schleuderstreuer nach einem der Ansprüche 1 bis 10, dadurch gekennzeichnet, daß die Flügel (67) auf der Grenzstreuscheibe (66) untereinander unterschiedlich einstellbar sind.

12. Schleuderstreuer nach einem der Ansprüche 1 bis 11, dadurch gekennzeichnet, daß die Flügel (67) der Grenzstreuscheibe (66) kürzer sind als die der Normalscheibe.

13. Schleuderstreuer nach einem der Ansprüche 1 bis 12, dadurch gekennzeichnet, daß für extrem große Streubreiten von ≧ 30 m zumindest ein Flügel (67) der Grenzstreuscheibe (66) gegen einen längeren Flügel auswechselbar ist.

14. Schleuderstreuer nach einem der Ansprüche 1 bis 13, dadurch gekennzeichnet, daß für extrem kleine Streubreiten von ≦ 12 m zumindest ein Flügel (67) der Grenzstreuscheibe (66) gegen einen kürzeren Flügel austauschbar ist.

15. Schleuderstreuer nach einem der Ansprüche 1 bis 6, dadurch gekennzeichnet, daß der Aufgabepunkt durch Verstellen des die Auslauföffnung (24) aufweisenden Bodens verlagerbar ist.

16. Schleuderstreuer nach einem der Ansprüche 1 bis 6, dadurch gekennzeichnet, daß der Aufgabepunkt durch Verstellen eines zwischen der Auslauföffnung (24) und der Schleuderscheibe (26) angeordneten Leitorgans für das Streugut verlagerbar ist.

17. Schleuderstreuer nach einem der Ansprüche 1 bis 6, dadurch gekennzeichnet, daß der Aufgabepunkt durch Verstellen der Schleuderscheibe (26) gegenüber der Auslauföffnung (24) verlagerbar ist.

18. Schleuderstreuer nach Anspruch 17 mit hydraulisch angetriebenen und von einem Träger aufgenommenen Schleuderscheiben, dadurch gekennzeichnet, daß die Schleuderscheiben (26) mittels des Trägers (30) verstellbar sind.

19. Schleuderstreuer nach Anspruch 17 oder 18, dadurch gekennzeichnet, daß der Träger (30) der Schleuderscheibe (26) schwenkbar gelagert ist.

20. Schleuderstreuer nach Anspruch 17 oder 18, dadurch gekennzeichnet, daß der Träger der Schleuderscheibe (26) verschiebbar gelagert ist.

21. Schleuderstreuer nach einem der Ansprüche 1 bis 6 und 15 bis 20 mit Auslauföffnungen, deren freier Querschnitt mittels eines schieber- oder blendenartigen Verschlusses einstellbar ist, dadurch gekennzeichnet, daß die Form der Auslauföffnung (24) und die einen Teil des freien Querschnittes begrenzende Kante (74) des Verschlusses so ausgebildet und/oder diese Kante so über die Auslauföffnung bewegbar ist, daß der Flächenschwerpunkt des freien Querschnittes mit zunehmender Größe desselben nach außen und/oder entgegen der Drehrichtung wandert.

22. Schleuderstreuer nach einem der Ansprüche 1 bis 21, dadurch gekennzeichnet, daß die Grenzstreuscheibe (66) für jeden Flügel (67) wenigstens zwei außerradial angeordnete Aufnahmen (77, 78) aufweist, von denen eine (77) achsnah, die andere (78) achsfern angeordnet ist und von denen eine die Positionierung des Flügels in verschiedenen Stellungen gestattet.

23. Schleuderstreuer nach einem der Ansprüche 1 bis 22, dadurch gekennzeichnet, daß die eine Aufnahme (78) vorgegebene Positionen für die Einstellung des Flügels (67) in verschiedenen Stellungen aufweist.

24. Schleuderstreuer nach einem der Ansprüche 1 bis 23, dadurch gekennzeichnet, daß die Aufnahmen als Löcher (77, 78) in der Grenzstreuscheibe (66) ausgebildet sind und daß die Flügel (67) in die Löcher eingreifende Zapfen mit Befestigungsmitteln an der Unterseite der Grenzstreuscheibe aufweisen.

25. Schleuderstreuer nach einem der Ansprüche 1 bis 24, dadurch gekennzeichnet, daß die achsnahe Aufnahme von einem einzigen Loch (77), die achsferne Aufnahme von mehreren auf einem Kreisbogen um das achsnahe Loch liegenden Löchern (78) gebildet ist.

## Claims

1. Centrifugal spreader for free-flowing spreading material, particularly fertilizer, with a storage container (1) receiving the fertilizer and having at least two adjustable outlet openings (24) and a normal centrifugal disk (25, 26, 70) covered with blades (29) below an outlet opening, which is interchangeably placed on its drive shaft, and with a blade-covered boundary spreading disk (66), constructed differently from the normal centrifugal disk and having a steep-flank spreading pattern, the boundary spreading disk and the normal centrifugal disks being mutually interchangeable, the feed or charging point determining the relative position between the outlet opening (24) and the centrifugal disk (25, 26, 66, 70) being adjustable both for the normal centrifugal disk and also for the boundary spreading disk (66), characterized in that the feed point for the boundary spreading disk (66) for forming a steep-flank spreading pattern is displaced with respect to the feed point of the normal centrifugal disk replaced by the boundary spreading disk in the rotation direction (72) thereof.

2. Centrifugal spreader according to claim 1, characterized in that the feed point for the boundary spreading disk (66) is adjustable in addition to the modification of the spreading width of the latter.

3. Centrifugal spreader according to claim 1 or 2, characterized in that the feed point on the boundary spreading disk (66) is adjustable in such a way that it is further displaced in the rotation direction with a larger spreading width than with a smaller spreading width.

4. Centrifugal spreader according to one of the claims 1 to 3, characterized in that the feed point on the boundary spreading disk (66) is adjustable as a function of the fertilizer type.

5. Centrifugal spreader according to one of the claims 1 to 4, characterized in that the feed point on the boundary spreading disk (66) is displaced counter to the rotation direction for granular fertilizers of large particle size and/or smooth surface compared with those having a small particle size and/or a rough surface.

6. Centrifugal spreader according to one of the claims 1 to 5, characterized in that the feed point on the boundary spreading disk (66) for fertilizers with a broken, angular grain is displaced counter to the rotation direction compared with granular fertilizers.

7. Centrifugal spreader according to one of the claims 1 to 6, characterized in that at least one blade (67) on the boundary spreading disk (66), at least for larger spreading widths, is set back less than the blades on the normal disk.

8. Centrifugal spreader according to one of the claims 1 to 7, characterized in that the blades (67) on the boundary spreading disk (66), at least for larger spreading widths, are set back less than the blades on the normal disk.

9. Centrifugal spreader according to one of the claims 1 to 8, characterized in that the position of the blades (67) on the boundary spreading disk (66) is adjustable for modifying their setback.

10. Centrifugal spreader according to one of the claims 1 to 9, characterized in that the position of the blades (67) on the boundary spreading disk (66) is adjustable as a function of the spreading width in such a way that the setback is greater for smaller spreading widths than for larger spreading widths.

11. Centrifugal spreader according to one of the claims 1 to 10, characterized in that the blades (67) on the boundary spreading disk (66) are mutually differently adjustable.

12. Centrifugal spreader according to one of the claims 1 to 11, characterized in that the blades (67) of the boundary spreading disk (66) are shorter than those of the normal disk.

13. Centrifugal spreader according to one of the claims 1 to 12, characterized in that for extremely large spreading widths of ≧ 30 m at least one blade (67) of the boundary spreading disk (66) is replaceable by a longer blade.

14. Centrifugal spreader according to one of the claims 1 to 13, characterized in that for extremely small spreading widths of ≦ 12 m at least one blade (67) of the boundary spreading disk (66) is replaceable by a shorter blade.

15. Centrifugal spreader according to one of the claims 1 to 6, characterized in that the feed point is displaceable by adjusting the base having the outlet opening (24).

16. Centrifugal spreader according to one of the claims 1 to 6, characterized in that the feed point is adjustable by adjusting a spreading material deflecting member located between the outlet opening (24) and the centrifugal disk (26).

17. Centrifugal spreader according to one of the claims 1 to 6, characterized in that the feed point is displaceable with respect to the outlet opening (24) by adjusting the centrifugal disk (26).

18. Centrifugal spreader according to claim 17 with hydraulically driven centrifugal disks received by a carrying member, characterized in that the centrifugal disks (26) are adjustable by means of the carrying member (30).

19. Centrifugal spreader according to claim 17 or 18, characterized in that the carrying member (30) of the centrifugal disk (26) is pivotably mounted.

20. Centrifugal spreader according to claim 17 or 18, characterized in that the carrying member of the centrifugal disk (26) is displaceably mounted.

21. Centrifugal spreader according to one of the claims 1 to 6 and 15 to 20 with outlet openings, whose free cross-section is adjustable by means of a slide or diaphragm-like closure, characterized in that the shape of the outlet opening (24) and the closure edge (74) defining part of the free cross-section are so constructed and/or said edge is so movable over the outlet opening that the centre of gravity of area of the free cross-section migrates with increasing size thereof in the outwards direction and/or counter to the rotation direction.

22. Centrifugal spreader according to one of the claims 1 to 21, characterized in that the boundary spreading disk (66) for each blade (67) has at least two outer-radially arranged receptacles (77, 78), whereof one (77) is close to the axis and the other (78) remote from the axis and whereof one permits the positioning of the blade in different positions.

23. Centrifugal spreader according to one of the claims 1 to 22, characterized in that one receptacle (78) has predetermined positions for setting the blade (67) in different positions.

24. Centrifugal spreader according to one of the claims 1 to 23, characterized in that the receptacles are constructed as holes (77, 78) in the boundary spreading disk (66) and that the blades (67) have pins with fastening means on the underside of the boundary spreading disk which engage in the holes.

25. Centrifugal spreader according to one of the claims 1 to 24, characterized in that the axially near receptacle is formed by a single hole (77) and the axially remote receptacle is formed by several holes (78) arranged in the form of a circular arc about the axially near hole.

## Revendications

1. Epandeur centrifuge pour matériau d'épandage susceptible de s'écouler, notamment de l'engrais, comprenant un réservoir de stockage (1) d'engrais présentant au moins deux sorties d'écoulement (24) réglables et un disque d'épandage normal (25,26,70) équipé d'ailettes (29) disposé sous une sortie d'écoulement, monté amovible sur son arbre de transmission, ainsi qu'un disque d'épandage en lisière (66) de conformation différente de celle du disque normal à figure d'épandage à flanc abrupt, le disque d'épandage en lisière et le disque d'épandage normal pouvant être remplacés l'un par l'autre, le point de déversement déterminant la position relative entre la sortie d'écoulement (24) et le disque d'épandage (25,26,66,70) étant réglable tant pour le disque d'épandage normal que pour le disque d'épandage en lisière (66), caractérisé en ce que pour le disque d'épandage en lisière (66), le point de déversement est décalé dans le sens de rotation du disque par rapport au point de déversement (72) du disque d'épandage normal qui est remplacé par le disque d'épandage en lisière pour la formation d'une figure d'épandage à flanc abrupt.

2. Epandeur centrifuge selon la revendication 1, caractérisé en ce que le point de déversement sur le disque d'épandage en lisière (66) est également réglable pour modifier la largeur d'épandage du disque d'épandage en lisière.

3. Epandeur centrifuge selon l'une des revendications 1 ou 2, caractérisé en ce que le point de déversement sur le disque d'épandage en lisière (66) est réglable de telle façon que pour une largeur d'épandage importante, il se trouve décalé davantage dans le sens de rotation que pour une petite largeur d'épandage.

4. Epandeur centrifuge selon l'une quelconque des revendications 1 à 3, caractérisé en ce que le point de déversement sur le disque d'épandage en lisière (66) est réglable en fonction du type d'engrais.

5. Epandeur centrifuge selon l'une quelconque des revendications 1 à 4, caractérisé en ce que pour l'utilisation d'engrais en grains de gros calibre et/ou à surface lisse, contrairement à ce qui est le cas pour l'utilisation d'engrais en grains de petite granulométrie et/ou à surface rugueuse, le point de déversement sur le disque d'épandage en lisière (66) est décalé inversement au sens de rotation.

6. Epandeur centrifuge selon l'une quelconque des revendications 1 à 5, caractérisé en ce que pour l'utilisation de brisures d'engrais anguleuses, contrairement à l'utilisation d'engrais en granulés, le point de déversement sur le disque d'épandage en lisière (66) est décalé inversement au sens de rotation.

7. Epandeur centrifuge selon l'une quelconque des revendications 1 à 6, caractérisé en ce que, au moins pour les largeurs d'épandage importantes, une ailette (67) au moins du disque d'épandage en lisière (66) est moins décalée que les ailettes du disque normal.

8. Epandeur centrifuge selon l'une quelconque des revendications 1 à 7, caractérisé en ce que les ailettes (67) du disque d'épandage en lisière (66) sont moins décalées que celles du disque normal, au moins pour les largeurs d'épandage importantes.

9. Epandeur centrifuge selon l'une quelconque des revendications 1 à 8, caractérisé en ce que la position des ailettes (67) sur le disque d'épandage en lisière (66) est réglable pour modifier leur décalage.

10. Epandeur centrifuge selon l'une quelconque des revendications 1 à 9, caractérisé en ce que la position des ailettes (67) du disque d'épandage (66) est réglable en fonction de la largeur d'épandage de façon que le décalage soit plus important dans le cas de petites largeurs d'épandage que dans le cas de grandes largeurs d'épandage.

11. Epandeur centrifuge selon l'une quelconque des revendications 1 à 10, caractérisé en ce que les ailettes (67) du disque d'épandage en lisière (66) sont réglables différemment les unes par rapport aux autres.

12. Epandeur centrifuge selon l'une quelconque des revendications 1 à 11, caractérisé en ce que les ailettes (67) du disque d'épandage en lisière (66) sont plus courtes que celles du disque normal.

13. Epandeur centrifuge selon l'une quelconque des revendications 1 à 12, caractérisé en ce que pour des largeurs d'épandage extrêmement grandes égales ou supérieures à 30 mètres, une au moins des ailettes (67) du disque d'épandage en lisière (66) peut être remplacée par une ailette plus longue.

14. Epandeur centrifuge selon l'une quelconque des revendications 1 à 13, caractérisé en ce que pour des largeurs d'épandage extrêmement petites égales ou inférieures à 12 mètres, une au moins des ailettes (67) du disque d'épandage en lisière (66) peut être remplacée par une ailette plus courte.

15. Epandeur centrifuge selon l'une quelconque des revendications 1 à 6, caractérisé en ce que le point de déversement peut être décalé par réglage du fond présentant l'ouverture d'écoulement.

16. Epandeur centrifuge selon l'une quelconque des revendications 1 à 6, caractérisé en ce que le point de déversement peut être décalé par réglage d'un organe de guidage pour le produit d'épandage.

17. Epandeur centrifuge selon l'une quelconque des revendications 1 à 6, caractérisé en ce que le point de déversement est mobile par réglage du disque d'épandage (26) par rapport à la sortie d'écoulement (24).

18. Epandeur centrifuge selon la revendication 17 comportant des disques d'épandage à entraînement hydraulique et portés par un support, caractérisé en ce que les disques d'épandage (26) sont réglables au moyen du support (30).

19. Epandeur centrifuge selon la revendication 17 ou 18, caractérisé en ce que le support (30) du disque d'épandage (26) est monté pivotant.

20. Epandeur centrifuge selon la revendication 17 ou 18, caractérisé en ce que le support du disque d'épandage (26) est monté coulissant.

21. Epandeur centrifuge selon l'une quelconque des revendications 1 à 6 et 15 à 20 comportant des sorties d'écoulement, dont la section libre est réglable au moyen d'une fermeture du type à coulisseau ou rideau, caractérisé en ce que la sortie d'écoulement (24) et l'arête (74) de la fermeture délimitant une partie de la section libre sont conformés et/ou cette arête est mobile au-dessus de la sortie d'écoulement de façon que le centre de gravité de la surface de la section libre se déplace vers l'extérieur et/ou inversement au sens de rotation en fonction de l'augmentation de cette section.

22. Epandeur centrifuge selon l'une quelconque des revendications 1 à 21, caractérisé en ce que le disque d'épandage en lisière (66) présente pour chaque ailette (67) au moins deux logements (77,78) disposés décalés radialement, dont l'un (77) est situé à proximité de l'axe, l'autre (78) éloigné de l'axe et dont l'un permet le réglage de l'ailette dans différentes positions.

23. Epandeur centrifuge selon l'une quelconque des revendications 1 à 22, caractérisé en ce que l'un (78) des logements présente des positions prédéterminées pour le réglage de l'ailette (67) dans différentes positions.

24. Epandeur centrifuge selon l'une quelconque des revendications 1 à 23, caractérisé en ce que les logements sont conformés en ouvertures (77,78) dans le disque d'épandage en lisière (66) et en ce que les ailettes (67) présentent des tenons venant s'engager à fixation dans les ouvertures sur la face inférieure du disque d'épandage en lisière.

25. Epandeur centrifuge selon l'une quelconque des revendications 1 à 24, caractérisé en ce que le logement proche de l'axe est constitué d'une seule ouverture (77), le logement éloigné de l'axe étant constitué de plusieurs ouvertures disposées circulairement autour du logement proche de l'axe.
